# EUROPÄISCHE PATENTSCHRIFT

(11) **EP 2 008 144 B1**
(45) Veröffentlichungstag und Bekanntmachung des Hinweises auf die Patenterteilung: **03.10.2012**
(21) Anmeldenummer: 07724287.3
(22) Anmeldetag: 17.04.2007
(51) Int. Cl.: G02B 21/08, G02B 5/00, G02B 7/00

(54) **EINRICHTUNG ZUR KONTRASTSTEIGERUNG FÜR RINGLICHTBELEUCHTUNGEN**
DEVICE FOR INCREASING THE CONTRAST FOR RING LIGHT ILLUMINATION SYSTEMS
DISPOSITIF D'AUGMENTATION DU CONTRASTE POUR DES ECLAIRAGES A LUMIERE ANNULAIRE

(30) Priorität: 20.04.2006 DE 102006018410
(43) Veröffentlichungstag der Anmeldung: 31.12.2008
(73) Patentinhaber: Carl Zeiss Microscopy GmbH, 07745 Jena (DE)
(72) Erfinder: HEIN, Detlef, 37083 Göttingen (DE); LAU, Berndt-Joachim, 07749 Jena (DE)
(74) Vertreter: Scholze, Humbert
(86) Internationale Anmeldenummer: PCT/EP2007/003349
(87) Internationale Veröffentlichungsnummer: WO 2007/121890

(56) Entgegenhaltungen:
- EP-A1- 1 363 153
- AT-B- 414 050
- US-A- 1 853 689
- US-A- 5 997 164

## Beschreibung

Die Erfindung betrifft eine Einrichtung zur Kontraststeigerung mit einem Ringlicht und einem Objektiv für Ringlichtbeleuchtungen, die zur Auflichtbeleuchtung von zu beobachtenden Objekten in der Mikroskopie, insbesondere in der Stereomikroskopie, vorgesehen sind, bestehend aus dem auf das Objektiv eines Mikroskops aufsetzbaren Ringlicht und einem optischen Element zur Kontraststeigerung für die aus dem Ringlicht austretenden Lichtstrahlen.

In der Stereomikroskopie werden häufig faseroptische Ringlichter zur Auflichtbeleuchtung der zu beobachtenden Objekte eingesetzt, um die zu beobachtenden Objekte hinreichend gut und einfach beleuchten zu können. Die Ringlichter werden dabei direkt oder über einen Adapter auf dem abbildenden Mikroskopobjektiv befestigt und ermöglichen eine rotationssymmetrische Beleuchtung um die mechanische Objektivachse. Aufgrund des relativ großen Faseröffnungswinkels und der leichten Neigung der Fasern in Richtung der Ringlichtmittenachse kann eine große Fläche gleichmäßig beleuchtet werden, wobei die homogene Ausleuchtung auch noch bei kleineren Arbeitsabständen gegeben ist. Allerdings sind die größtmöglichen Objektfelder, die mit üblichen Stereomikroskopen abgebildet werden können, verglichen mit den durch die Ringlichter ausgeleuchteten Feldern in der Objektebene relativ klein. Aus dem Stand der Technik sind Zusatzeinrichtungen zur Verbesserung der Lichtausbeute von Ringlichtern bekannt, indem zusätzliche Optikbauelemente unter dem Ringlichtspalt bzw. den Ringlichtpunkten angeordnet werden, die den Öffnungswinkel an die zu beobachtenden Objekte anpassen. So wird in der DE 40 16 264 A1 eine Ringbeleuchtung mit Fokussieroptiken beschrieben, die segmentweise unter den Fasern angeordnet und radial verschiebbar sind, so dass durch die radiale Verschiebung der Optiksegmente eine Schnittpunktveränderung der Teillichtbündel eintritt und somit eine Fokussierung. In der EP 0 969 304 B1 wird ein Ringlicht mit einer Vorsatzoptik beschrieben, die eine spezielle Linsengeometrie besitzt und zur Fokussierung axial verschoben werden kann und in der EP 0 857 316 B1 werden rotationssymmetrische Spiegelelemente zur Strahlumlenkung einer Ringlichtbeleuchtung eingesetzt. Hierbei handelt es sich allerdings um eine relativ großvolumige Einrichtung, die auch nur als Durchlichteinrichtung dargestellt ist. Allen Einrichtungen ist gemeinsam, dass sie die Lichtausbeute durch die Bündelung der sonst nicht genutzten Lichtenergie erhöhen, wobei die Konstruktionen zur Realisierung einer homogenen, rotationssymmetrischen Ringlichtbeleuchtung relativ aufwendig sind und zum Teil einen großen Bauraum benötigen, was die Zugänglichkeit zum Objekt entsprechend verschlechtert. Aufgrund der Sonderformen der verwendeten optischen Elemente ist eine Produktion erst ab größeren Stückzahlen wirtschaftlich, besonders die Ringlichter mit größeren Durchmessern werden in relativ kleinen Stückzahlen produziert. Je größer ein Ringlicht ist, umso mehr Lichtenergie steht normalerweise im Objektraum zur Verfügung, d.h. die Bündelung der gesamten Lichtenergie ist speziell bei größeren Ringlichtern nicht sehr sinnvoll. Durch die Verwendung von faseroptischen Ringlichtern zusammen mit leistungsstarken Kaltlichtquellen reicht die verfügbare Lichtenergie auch bei Ringlichtern mit mittleren und kleineren Durchmessern aus. Durch die speziellen Optikelemente kann sich die Homogenität der Ausleuchtung, die ohne Optikelemente zumindest an diffus reflektierenden Objekten bereits sehr gut ist, verschlechtern, denn die Vorsatzoptiken müssen den schmalen Kreisringquerschnitt mit einem relativ großen Kreisringdurchmesser in einen kleineren Kreisquerschnitt in der Objektebene umwandeln.
Es sind weiterhin segmentiert ansteuerbare Ringlichter auf LED-Basis bekannt, die aber hinsichtlich der Intensität relativ leistungsschwach und aufgrund der speziellen Ansteuerung vergleichsweise teuer sind. Außerdem sind Vorsatz-Segment-Blenden für Ringlichter bekannt, die allerdings eine permanente Mindestabdeckung von 120° des Ringlichtspaltumfangs zur Folge haben, was nicht erwünscht ist.

Der Erfindung liegt deshalb die Aufgabe zugrunde, eine möglichst kostengünstige und einfach zu bedienende Einrichtung zur optimalen Anpassung einer Ringlichtbeleuchtung an ein zu beobachtendes Objekt zu schaffen, mit der eine Kontrastverbesserung für Ringlichtbeleuchtungen erhalten wird und zusätzlich in einer erweiterten Ausführungsform mit dieser Einrichtung auch die Beleuchtungsazimute variierbar sind.

Gelöst wird diese Aufgabe durch die kennzeichnenden Merkmale des Anspruches 1, indem eine rotationssymmetrisch und verstellbar ausgebildete Blende vor dem Lichtaustritts des Ringlichts angeordnet ist, wobei die Blende in Bezug auf das Objektiv in der Höhe und in Bezug auf die optische Achse des Objektivs im Durchmesser verstellbar ist, Mittel zur Klemmung der Blende vorhanden sind, und dass die mit dem Ringlicht verbundene Blende axial zur Ringlichtachse höhenverstellbar, einseitig dezentrierbar und um die Ringlichtachse drehbar gelagert ausgebildet ist, wobei die Dezentrierung und die azimutale Ausrichtung der Blende getrennt voneinander einstellbar sind, so dass die zentrierte Blendeneinrichtung schnell reproduzierbar ist.

Eine vorteilhafte Weiterbildung wird darin gesehen, dass die mit dem Ringlicht verbundene Blende vorzugsweise mittels eines Bewegungsgewindes zur Anpassung an unterschiedlich große Objektfelder, wie sie in der Stereomikroskopie üblich sind, in der Höhe und im Durchmesser verstellbar vorgesehen ist, wobei die maximale Höhenverstellung so groß ist, dass ein Feld in einer Objektebene ausgeleuchtet werden kann, das noch um einen ausreichenden Sicherheitsbereich größer als ein maximal abbildbarer Objektfelddurchmesser ist.

Bevorzugte Ausführungsformen werden darin gesehen, dass die mit dem Ringlicht verbundene Blende sowohl zur Einstellung von richtungsabhängigen Beleuchtungen und Anpassung an den Objektfelddurchmesser höhenverstellbar und dezentrierbar zur einseitigen Beleuchtung mit begrenzten Azimuten seitlich verstellbar angeordnet ist, als auch für spezielle Abbildungsanordnungen dezentrierbar für einseitige bzw. nicht rotationssymmetrische Beleuchtungsbedingungen, bei denen die Abbildungskanäle in einem Mikroskopobjektiv nicht symmetrisch angeordnet sind, vorgesehen ist.
Die Blende ist dazu über eine Schnittstelle an dem Ringlicht angekoppelt oder Bestandteil des Ringlichts. Durch die vorgesehene Schnittstelle an dem Ringlicht kann die Blende bei Bedarf auf Kundenwunsch einfach und kostengünstig nachgerüstet werden.

Des Weiteren ist die Blendenoberseite vorteilhaft partiell oder komplett abgeschrägt vorgesehen, so dass die an der Blende reflektierten Lichtstrahlen nach außen gelenkt werden und dadurch die Gefahr von Mehrfachreflexionen mit möglichem Wiedereintritt in das Mikroskopobjektiv minimiert wird, oder die Blendenoberseite ist reflexmindernd beschichtet oder die Blende selbst ist aus einem reflexmindernden Material gefertigt.

Die Blendeneinrichtung ist in vorteilhafter Weise ferngesteuert motorisch verstellbar und teilweise oder komplett codiert ausgeführt, zur Weiterverarbeitung von Informationen über die aktuellen Einstellungen. Eine Anpassung an vorhandene Beleuchtungsbedingungen eines Mikroskops erfolgt dabei durch die Auswertung des Kontrastzustands und eine entsprechend durchzuführende Nachregelung der Blende bis zu einem Optimum oder durch die automatische Abfrage und/oder Auswertung des vorhandenen Systemzustands, beispielsweise durch die Angabe des Objektivtyps, des Ringlichttyps und des errechneten Objektfelddurchmessers. Zusätzlich sind die Einstellungen der Blende durch geeignete Markierungen und/oder Beschriftungen ablesbar vorgesehen.

Die Blende ist auch in Kombination mit Fokussieroptiken einsetzbar. Dazu ist die Blende vorzugsweise nach den Fokussieroptiken anzuordnen, wobei die Fokussieroptik ein hinreichend großes homogenes Feld erzeugen muss.

Eine vorteilhafte Variante wird darin gesehen, dass die Blende als verstellbare Irisblende ausgebildet ist und sich dadurch der Blendendurchmesser variieren lässt.

Wesentlich an der neuen Einrichtung zur Kontraststeigerung für Ringlichtbeleuchtungen ist, dass sich die erfindungsgemäße Einrichtung nicht nur auf Ringlichter an Objektiven von Stereomikroskopen des Fernrohrtyps beschränkt, sondern auch auf Stereomikroskope des Greenough-Typs und auch in allen anderen Mikroskopen einsetzbar ist. Die erfindungsgemäße Einrichtung kann zusammen mit sämtlichen gängigen Ringlichtbeleuchtungen kombiniert werden. Sie eignet sich besonders für faseroptische Spaltringlichter, sie kann aber auch zusammen mit faseroptischen Mehrpunktringlichtern und ein- oder mehrreihigen Ringlichtern auf LED-Basis eingesetzt werden. Das bevorzugte Einsatzgebiet liegt besonders im Bereich von Ringlichtbeleuchtungen auf Hellfeldbasis, aber auch an Dunkelfeldbeleuchtungen.
Weitere Vorteile der erfindungsgemäßen Einrichtung bestehen darin, dass sie sich auch mit feststehenden und/oder fokussierbaren Vorsatzoptiken kombinieren lässt. Hierfür ist die Blendeneinrichtung vorzugsweise nach der Vorsatzoptik anzuordnen, wobei die Vorsatzoptik für diese Anwendung ein hinreichend großes homogenes Feld erzeugen muss.

Die Erfindung wird nachfolgend anhand von schematisch in Zeichnungen dargestellten Ausführungsbeispielen näher erläutert.
Es zeigen:
- Fig. 1: eine schematische Darstellung des Zusammenwirkens von Mikroskopobjektiv und Ringlicht;
- Fig. 2: die schematische Darstellung des Zusammenwirkens von Mikroskopobjektiv und Ringlicht bei Einsatz einer Blende;
- Fig. 3: eine Teilansicht von Mikroskopobjektiv, Ringlicht und Blende;
- Fig. 4: eine Höhenverstellung der Blende;
- Fig. 5: eine Durchmesseränderung der Blende;
- Fig. 6: eine Dezentrierung der Blende;
- Fig. 7: die schematische Darstellung der Dezentrierung der Blende;
- Fig. 8: eine Draufsicht auf eine dezentrierte Blende;
- Fig. 9: ein Ausführungsbeispiel einer erfindungsgemäßen Einrichtung zur Höhenverstellung der Blende;
- Fig. 10: ein Ausführungsbeispiel einer erfindungsgemäßen Einrichtung zur Dezentrierung und Höhenverstellung der Blende.

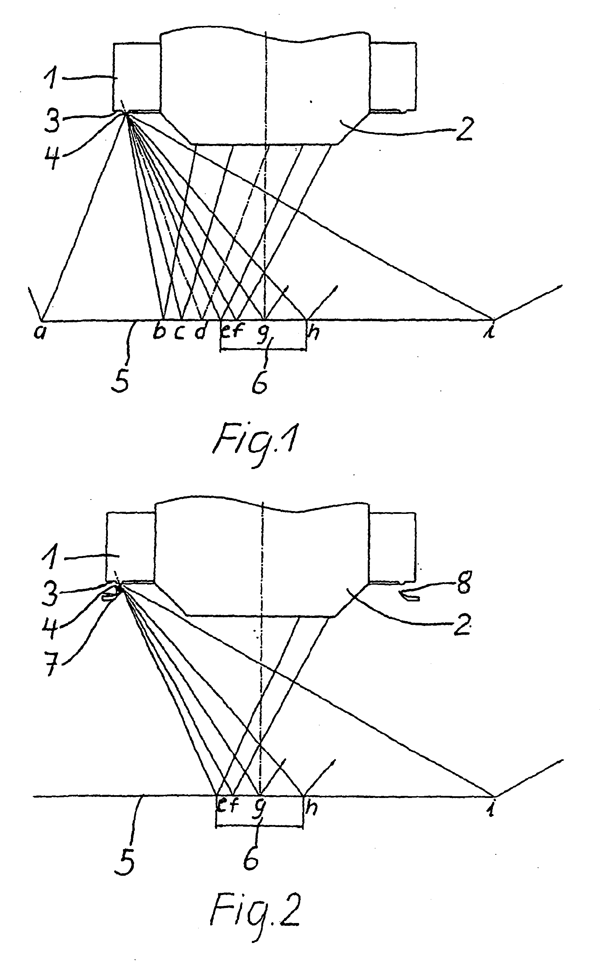

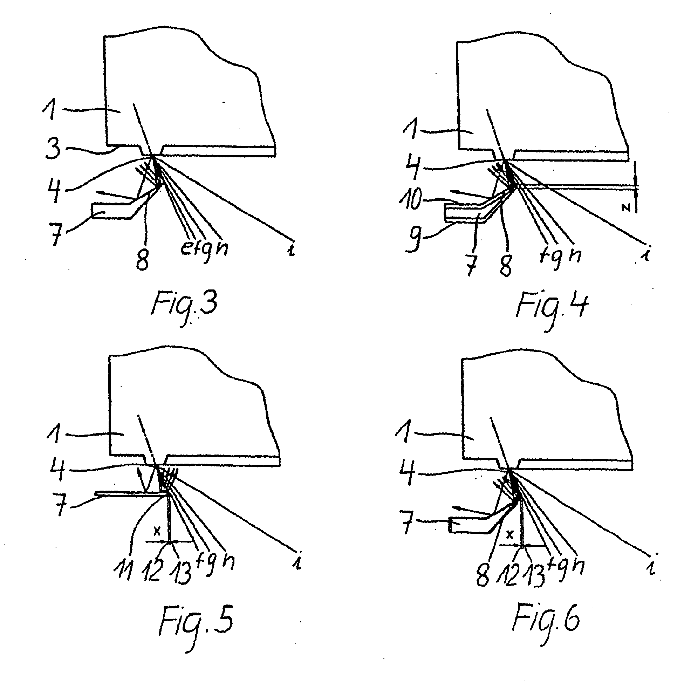

Figur 1 zeigt eine Schnittdarstellung eines Ringlichts 1 mit einem Strahlenverlauf, der aus Übersichtsgründen nur auf der linken Seite dargestellt ist. Das Ringlicht 1 ist zur Auflichtbeleuchtung an einem Mikroskopobjektiv 2 angeordnet und besitzt an einer Unterseite 3 einen umlaufenden Spalt 4, aus dem z.B. Lichtstrahlen a bis i nach unten und etwas zur Achsmitte des Mikroskopobjektivs 2 geneigt austreten, wobei der Lichtstrahl d auf einer als Linie dargestellten Mittenachse des Lichtaustritts liegt. Die Lichtstrahlen a und i des Ringlichts 1 begrenzen den Lichtaustritt symmetrisch zu dieser Mittenachse. Die Lichtstrahlen a bis i treffen dabei auf eine Objektebene 5 an verschiedenen Positionen und werden von dort entsprechend dem Reflexionsgesetz reflektiert. Praktisch erzeugen die meisten Objekte auch einen gewissen Anteil diffuser Reflexionen, in diesem Ausführungsbeispiel wird zunächst nur der kritischste Fall eines ebenen Spiegels, der größer als der größtmögliche abbildbare Objektfeldfelddurchmesser 6 ist, dargestellt. Dieser größtmögliche Objektfelddurchmesser 6 wird mit einem bekannten nicht näher dargestellten Stereomikroskop beobachtet. Alle Lichtstrahlen, die außerhalb des größtmöglichen abbildbaren Objektfelddurchmessers 6 liegen, tragen zur Abbildung nichts bei. Besonders unerwünscht sind dabei die Lichtstrahlen b, c und d, da sie das Bild ohne Objektinformation aufhellen, d.h. es wird Lichtenergie in das Mikroskopobjektiv 2 eingekoppelt, die aufgrund der fehlenden Objektinformationen nur den Hintergrund auf Kosten des Kontrastes aufhellt bzw. die vorhandene Objektabbildung überstrahlt. Für eine Abbildung nutzbar sind somit nur die Lichtstrahlen e, f, g, h des Ringlichts 1, wobei nur die Lichtstrahlen e und f auch direkt in das Mikroskopobjektiv 2 reflektiert werden. Die Lichtstrahlen g und h können nur dann in das Mikroskopobjektiv 2 eintreten, wenn sie durch das Objekt entsprechend abgelenkt werden. Das Licht außerhalb des größtmöglichen abbildbaren Objektfelddurchmessers 6 kann dabei auch zur Blendung des Benutzers eines Mikroskops führen.
Durch die Anbringung einer erfindungsgemäßen Blende 7 am Ringlicht 1 gemäß Figur 2 lässt sich der gesamte Objektfelddurchmesser 6 präziser ausleuchten, ohne dass kontrastvermindernde Lichtstrahlen in das Mikroskopobjektiv 2 eintreten können. Die Lichtstrahlen zwischen h und i tragen zwar zur Abbildung weiterhin nichts bei, sie treten aber nicht direkt in das Mikroskopobjektiv 2 ein und verschlechtern somit auch nicht den Kontrast. Besonders vorteilhaft wirkt sich eine schräge Ausbildung einer Oberseite 8 der Blende 7 aus. Dadurch werden störende Lichtstrahlen nach außen gelenkt, wodurch Störreflexe vermeidbar sind.
Eine vergrößerte Darstellung der Anordnung der Blende 7 zeigt Figur 3. Zur Anpassung an die verschiedenen Objektfelddurchmesser 6, die an Stereomikroskopen aus den verschiedenen Zoomstellungen in Verbindung mit den unterschiedlichen Mikroskopobjektivvergrößerungen resultieren, ist eine Veränderung der Blendenlage und/oder des Blendendurchmessers nötig. Zwar lassen sich auch mehrere wechselbare Festblenden 7 anordnen, trotzdem lassen sich nicht alle Zwischenstellungen erfassen und das Wechseln der einzelnen Blenden 7 ist zeitraubend und umständlich.
In den Figuren 4,5 und 6 werden Verstellmöglichkeiten der Blende 7 zur Verkleinerung des Objektfelddurchmessers 6 beschrieben. Das Ziel besteht darin, dass beispielsweise der Lichtstrahl f nach der Anpassung der Blende 7 diese gerade noch passieren soll.
Gemäß Figur 4 wird die Blende 7 um einen Betrag z nach oben von einer unteren Position 9 in eine obere Position 10 verschoben, so dass die neu positionierte Blende 7 das Lichtstrahlbündel noch mehr beschneidet und gerade noch den Lichtstrahl f passieren lässt.
Figur 5 zeigt als eine Variante eine Verkleinerung des Durchmessers der Blende 7, was am einfachsten mittels einer Irisblende durchzuführen ist. Durch das Verkleinern des Durchmessers der Blende 7 wandert eine Blendenkante 11 um den Betrag x aus einer äußeren Position 12 in eine innere Position 13. Dadurch wird das Lichtstrahlenbündel noch mehr beschnitten und der Lichtstrahl f kann dann die Blende gerade noch passieren. Die als Irisblende ausgebildete Blende 7 erfordert eine näherungsweise waagerechte Oberfläche, die zudem meistens noch mit einer gleitoptimierten und deshalb im ungünstigsten Fall reflektierenden Oberfläche versehen ist, so dass diese Anordnung anfälliger für die indirekte Einkopplung von Störreflexen in das Mikroskopobjektiv 2 ist.
Wird die Blende 7 gemäß Figur 6 um den Betrag x von einer zentrierten Position in eine dezentrierte Position verschoben, dann lässt sich auch hier das Strahlenbündel zumindest einseitig definiert beschneiden, so dass der Lichtstrahl f dann auf dieser Seite gerade noch die neu positionierte Blende 7 passieren kann, wobei die Dezentrierung der Blende 7 nur auf einer Seite dargestellt ist.

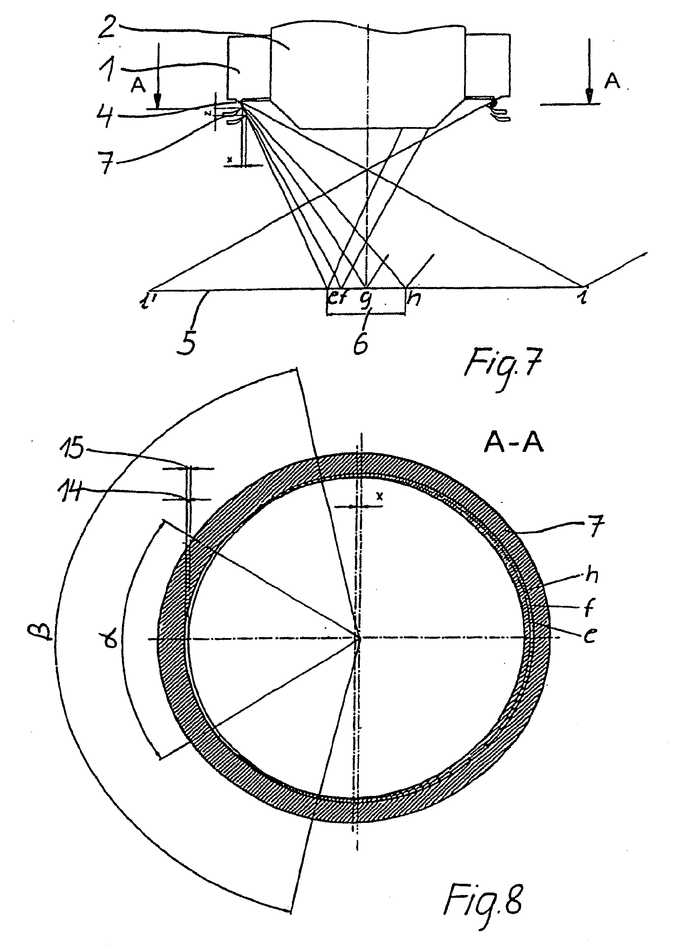

Die Figuren 7 und 8 zeigen die Einstellmöglichkeiten, die sich aus einer Dezentrierung der Blende 7 ergeben. Figur 7 zeigt das Ringlicht 1, das an dem Mikroskopobjektiv 2 angeordnet ist, wobei unter dem Ringlicht 1 eine zentrierte Blende 7 die gerade noch eine Ausleuchtung des Objektfelddurchmessers 6 ermöglicht, angeordnet ist. Bei einer Dezentrierung der Blende 7 verschiebt sich die eine Blendenseite in Richtung einer größeren Blendenöffnung und die gegenüberliegende Blendenseite in Richtung einer kleineren Blendenöffnung. Wenn die Blende 7 gemäß Figur 7 um den Betrag x dezentriert und zusätzlich auch um den Betrag z in der Höhe verschoben wird, bleibt die begrenzende Wirkung auf der linken Seite erhalten, da die Blende 7 etwa entlang dem begrenzenden Lichtstrahl e verschoben wird. Die so neu positionierte Blende 7 bewegt sich bei gleichbleibendem Blendendurchmesser natürlich mit der kompletten Blendenöffnung in Richtung der Dezentrierung. Auf der rechten Blendenseite wirken sich sowohl die Dezentrierung um den Betrag x als auch die Höhenverstellung um den Betrag z beschneidend aus, so dass die Blende 7 auf der rechten Seite gar keine relevanten Lichtstrahlen mehr passieren lässt. Nur der Lichtstrahl i', der dem Lichtstrahl i auf der linken Blendenseite entspricht, kann die Blende 7 noch passieren, er hat aber keine Auswirkungen auf die Abbildung.
Zur Veranschaulichung der Größenordnung dient Figur 8, die den Schnitt A-A als Draufsicht von Figur 7 zeigt. Die drei Lichtstrahlen e, f und h des Ringlichts 1 sind aufgrund der Rotationssymmetrie zur Ringlichtmittenachse jeweils als Kreis dargestellt. Der Lichtstrahl e berührt in Figur 7 die dezentrierte Blende 7 auf der linken Seite, deshalb liegt in Figur 8 der entsprechende größte Kreis des Lichtstrahls e auf der linken Seite am wirksamen Blendeninnendurchmesser der Blende 7 an. Nur das Licht zwischen der Blende 7 und dem Lichtstrahl f tritt direkt in das Mikroskopobjektiv 2 ein, der entsprechend wirkende Lichtanteil wird in Figur 8 durch die sichelförmige Fläche zwischen dem Kreis des Lichtstrahls f und dem wirksamen Blendeninnendurchmesser der Blende 7 symbolisiert. Die entstehende sichelförmige Fläche hat vom Ringlichtmittelpunkt aus gesehen eine Winkelausdehnung α, die hier deutlich kleiner als 90° ist. Die hierzu gehörende Sichelbreite 14 ist relativ klein, so dass die entsprechende Sichelfläche ebenfalls recht klein ist. Das Licht zwischen der Blende 7 und dem Lichtstrahl h trifft zumindest auf den auszuleuchtenden Objektfelddurchmesser 6 auf, wenn auch nicht alle Lichtstrahlen in das Mikroskopobjektiv 2 eintreten. Der entsprechend wirkende Lichtanteil wird in Figur 8 durch die ebenfalls sichelförmige Fläche zwischen dem Kreis des Lichtstrahls h und dem wirksamen Blendeninnendurchmesser der Blende 7 symbolisiert. Die entstehende sichelförmige Fläche hat vom Ringlichtmittelpunkt aus gesehen eine Winkelausdehnung β, die hier etwas unter 180° liegt. Die hierzu gehörende Sichelbreite 15 ist deutlich größer als die Sichelbreite 14. Figur 8 zeigt, dass sich schon durch eine relativ kleine Dezentrierung eine eindeutig einseitige Schrägbeleuchtung von weniger als der Hälfte des Lichtspaltumfangs einstellen lässt.

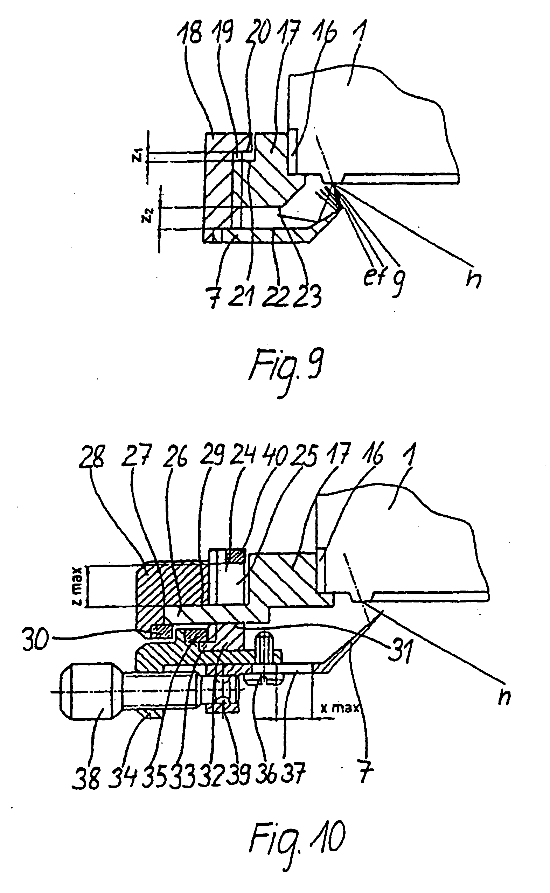

Figur 9 zeigt ein Ausführungsbeispiel für die erfindungsgemäße Einrichtung zur Höhenverstellung der Blende 7 entsprechend Figur 4. Auf dem Ringlicht 1 befindet sich als Schnittstelle ein Außengewinde 16, auf das die nachrüstbare Einheit über ein Innengewinde an einem Adapterring 17 aufgeschraubt wird. Die Blende 7 ist fest mit einem Rändelring 18 für eine Höhenverstellung verbunden und kann aufgrund eines Bewegungsgewindes 19 auf dem Rändelring 18 und dem Adapterring 17 durch eine Drehung des Rändelrings 18 in der Höhe um einen Teilbetrag z₁ nach unten oder einen Teilbetrag z₂ nach oben verstellt werden. Der Stellweg wird durch einen Anschlag 20 am Rändelring 18 nach unten begrenzt. Die Bewegung nach unten ist beendet, wenn der Anschlag 20 an einer Kante 21 des Adapterringes 17 anschlägt. Nach oben wird der Stellweg durch eine Oberkante 22 der Blende 7 begrenzt. Die Bewegung der Blende 7 nach oben ist beendet, wenn die Oberkante 22 der Blende 7 an einer Unterkante 23 des Adapterringes 17 anschlägt. Die erfindungsgemäße Einrichtung gemäß Figur 9 ist extrem kostengünstig und platzsparend aufgebaut, zudem ist sie sehr leicht am Ringlicht 1 nachzurüsten, sofern dort das Schnittstellengewinde vorhanden ist.

Figur 10 zeigt ein Ausführungsbeispiel der erfindungsgemäßen Einrichtung, die eine Höhenverstellung, eine Dezentrierung und eine azimutale Ausrichtung der Blende 7 ermöglicht. Dadurch können gezielt richtungsabhängige Beleuchtungen eingestellt werden, wobei jederzeit eine Anpassung an den gerade wirksamen Objektfelddurchmesser 6 möglich ist. Auf dem Ringlicht 1 befindet sich als Schnittstelle ein Außengewinde 16, auf das die vorzugsweise nachrüstbare erfindungsgemäße Einrichtung über das Innengewinde des Adapterrings 17 aufgeschraubt wird. Ein Gewindering 24 besitzt drei auf dem Umfang gleichmäßig verteilte, senkrecht angeordnete und oben offene Durchbrüche 25, in die drei entsprechend breite Stege 26 des Adapterrings 17 eingepasst sind, so dass sich eine Verdrehsicherung zwischen dem Adapterring 17 und dem Gewindering 24 ergibt. Auf einem Außendurchmesser 27 der Stege 26 des Adapterrings 17 ist ein Rändelring 28 zur Höhenverstellung drehbar gelagert, die axiale Fixierung geschieht durch eine Auflagefläche 29 des Rändelrings 28 zusammen mit einem Vorschraubring 30. Das Innengewinde im Rändelring 28 greift in das Außengewinde vom Gewindering 24 ein. Dreht man den Rändelring 28, so ändert der Gewindering 24 über das Gewinde zwangsläufig seine Höhe, da er axial beweglich aber verdrehgesichert ist und der Rändelring 28 eine axiale Fixierung hat. Der Stellweg nach oben wird durch die unteren Flächen 31 der drei Durchbrüche 25 im Gewindering 24 begrenzt (dargestellte Position), der Stellweg nach unten wird durch den als Anschlag wirkenden Vorschraubring 40 begrenzt, der im Gewindering 24 befestigt ist. Die maximale Höhenverstellung ist so groß, dass sich bei voll abgesenkter Einrichtung ein Feld in der Objektebene 5 ausleuchten lässt, dass noch um einen ausreichenden Sicherheitsbereich größer ist, als der maximal abbildbare Objektfelddurchmesser 6. An einer Unterseite 32 des Gewinderings 24 befindet sich ein Ansatz 33, als Teil der Drehlagerung zur Azimuteinstellung der Dezentrierung. Der Ansatz 33 wird zwischen einem Rändelring 34 und einem Vorschraubring 35 axial fixiert, so dass noch eine hinreichend leichtgängige Drehung des Rändelrings 34 möglich ist. Die Blende 7 ist am Rändelring 34 befestigt und kann durch diesen azimutal ausgerichtet werden. Die Blende 7 ist über mehrere Schrauben 36 mit dem Rändelring 34 verbunden. Die Schrauben 36 sind in Nuten bzw. Langlöchern 37 der Blende 7 eingepasst und ermöglichen so eine Dezentrierung der Blende 7 in nur eine Richtung. Begrenzt wird der Führungsweg in x-Richtung durch die Länge der Nuten 37 und den Durchmesser der Schrauben 36. Zur feinfühligen Einstellung der Dezentrierung wird eine Rändelschraube 38 verwendet, die am Ende eine Eindrehung 39 in Form einer Hohlkehle besitzt, in die ein senkrecht angeordneter, nicht näher dargestellter Mitnehmerstift eingreift. Der Mitnehmerstift steckt in der Blende 7 und sorgt so für eine axiale Fixierung der Blende 7 an der Rändelschraube 38 bei einer noch möglichen Drehbewegung der Rändelschraube 38. Dreht man die Rändelschraube 38 gegen den Uhrzeigersinn aus dem Rändelring 34 heraus, so wird die Blende 7 um den gleichen Betrag in dieselbe Richtung dezentriert. Vorteilhafterweise ist der Blendendurchmesser so klein, dass bei zentrierter und vollkommen angehobener Blende 7 kein Lichtstrahl die Blende 7 passieren kann und sogar noch eine Überdeckung vorhanden ist. Dadurch gibt es noch genügend Reserven für eine hinreichend große Dezentrierung auch bei kleinsten auszuleuchtenden Objektfelddurchmessern 6. Bei ganz eingeschraubter Rändelschraube 38 ergibt sich zwangsläufig eine zentrierte Blende 7, wobei dann die eingestellte Azimutrichtung aufgrund der Rotationssymmetrie der Blende 7 ohne Bedeutung ist. Diese sehr einfache Einstellung der Blende 7 ist die Basis für eine Anpassung der Höhenposition der Blende 7 an das Objektfeld bei einer rotationssymmetrischen Beleuchtung.
Wenn man eine geeignete Dezentrierung eingestellt und die Höhenposition der Blende 7 entsprechend angepasst hat, lassen sich beliebige azimutale Ausrichtungen ohne Kontrasteinbußen auswählen. Ein weiterer Vorteil der Anordnung der Blende 7 unterhalb des Ringlichts 1 ist die Eignung für spezielle Abbildungsanordnungen, in denen die Abbildungskanäle im Mikroskopobjektiv 2 nicht symmetrisch angeordnet sind. Hier hat die Dezentrierung auch einen Einfluss auf die Anpassung der Beleuchtung an das Objektfeld.

Die Erfindung ist nicht auf die Ausführungsbeispiele beschränkt, sondern im Rahmen der Offenbarung hinsichtlich der Verstellung und Klemmung der Blende in Abhängigkeit vom Einsatz an unterschiedlichen Mikroskopen vielfach variabel.

### Bezugszeichenliste

- 1: Ringlicht
- 2: Mikroskopobjektiv
- 3: Unterseite des Ringlichtes
- 4: Spalt
- 5: Objektebene
- 6: größtmöglicher abbildbarer Objektfelddurchmesser
- 7: Blende
- 8: Oberseite der Blende
- 9: untere Position der Blende
- 10: obere Position der Blende
- 11: Blendenkante
- 12: äußere Position der Blendenkante
- 13: innere Position der Blendenkante
- 14: Sichelbreite
- 15: Sichelbreite
- 16: Außengewinde
- 17: Adapterring
- 18: Rändelring für Höhenverstellung
- 19: Bewegungsgewinde
- 20: Anschlag
- 21: Kante des Adapterrings
- 22: Oberkante der Blende
- 23: Unterkante des Adapterringes
- 24: Gewindering
- 25: Durchbruch im Gewindering
- 26: Steg des Adapterrings
- 27: Außendurchmesser des Stegs
- 28: Rändelring zur Höhenverstellung
- 29: Auflagefläche des Rändelringes
- 30: Vorschraubring
- 31: untere Fläche des Durchbruchs im Gewindering
- 32: Unterseite des Gewinderings
- 33: Ansatz
- 34: Rändelring zur Drehlagerung
- 35: Vorschraubring
- 36: Schraube
- 37: Nut
- 38: Rändelschraube
- 39: Eindrehung
- 40: Vorschraubring
- a-i: aus dem Ringlicht austretende Lichtstrahlen
- z: Betrag der Höhenverschiebung der Blende
- x: Betrag der seitlichen Verschiebung der Blende
- α: Winkelausdehnung der sichelförmigen Fläche
- β: Winkelausdehnung der sichelförmigen Fläche
- z₁: Teilbetrag der Höhenverschiebung der Blende
- z₂: Teilbetrag der Höhenverschiebung der Blende

## Patentansprüche

1. Einrichtung zur Kontraststeigerung mit einem Ringlicht und einem Objektiv für Ringlichtbeleuchtungen, die zur Auflichtbeleuchtung von zu beobachtenden Objekten in der Mikroskopie, insbesondere in der Stereomikroskopie, vorgesehen sind, bestehend aus dem auf das Objektiv (2) eines Mikroskops aufsetzbaren Ringlicht (1) und einem optischen Element zur Kontraststeigerung für die aus dem Ringlicht (1) austretenden Lichtstrahlen,
**dadurch gekennzeichnet,**
**dass** dieses optische Element zur Kontraststeigerung als eine rotationssymmetrische und verstellbare Blende (7) ausgebildet ist, die vor dem Lichtaustritt des Ringlichts (1) angeordnet ist, wobei die Blende (7) in Bezug auf das Objektiv (2) in der Höhe und in Bezug auf die optische Achse des Objektivs (2) im Durchmesser verstellbar ist, Mittel zur Klemmung der Blende (7) vorhanden sind, und dass die mit dem Ringlicht (1) verbundene Blende (7) axial zur Ringlichtachse höhenverstellbar, einseitig dezentrierbar und um die Ringlichtachse drehbar gelagert ausgebildet ist, wobei die Dezentrierung und die azimutale Ausrichtung der Blende (7) getrennt voneinander einstellbar sind.

2. Einrichtung zur Kontraststeigerung nach Anspruch 1,
**dadurch gekennzeichnet,**
**dass** die mit dem Ringlicht (1) verbundene Blende (7) zur Einstellung von richtungsabhängigen Beleuchtungen und Anpassung an den Objektfelddurchmesser (6) höhenverstellbar und dezentrierbar zur einseitigen Beleuchtung mit begrenzten Azimuten seitlich verstellbar angeordnet ist.

3. Einrichtung zur Kontraststeigerung nach Anspruch 1,
**dadurch gekennzeichnet,**
**dass** die Blende (7) für spezielle Abbildungsanordnungen dezentrierbar für einseitige bzw. nicht rotationssymmetrische Beleuchtungsbedingungen, bei denen die Abbildungskanäle in einem Mikroskopobjektiv (2) nicht symmetrisch angeordnet sind, vorhanden ist.

4. Einrichtung zur Kontraststeigerung nach einem der Ansprüche 1 bis 3,
**dadurch gekennzeichnet,**
**dass** die Blende (7) mittels einer Schnittstelle (16) an das Ringlicht (1) ankoppelbar vorgesehen ist.

5. Einrichtung zur Kontraststeigerung nach einem der Ansprüche 1 bis 4,
**dadurch gekennzeichnet,**
**dass** die Blende (7) Bestandteil des Ringlichts (1) ist.

6. Einrichtung zur Kontraststeigerung nach einem der Ansprüche 1 bis 5,
**dadurch gekennzeichnet,**
**dass** eine Oberseite (8) der Blende (7) partiell oder komplett abgeschrägt ausgebildet ist, so dass zur Minimierung von Mehrfachreflexionen mit möglichem Wiedereintritt in das Mikroskopobjektiv (2) die an der Blende (7) reflektierten Lichtstrahlen (a-i) nach außen lenkbar sind.

7. Einrichtung zur Kontraststeigerung nach Anspruch 6,
**dadurch gekennzeichnet,**
**dass** die Oberseite (8) der Blende (7) reflexmindernd beschichtet oder die Blende (7) aus einem reflexmindernden Material ausgeführt ist.

8. Einrichtung zur Kontraststeigerung nach einem der Ansprüche 1 bis 7,
**dadurch gekennzeichnet,**
**dass** die Blende (7) ferngesteuert motorisch verstellbar ist.

9. Einrichtung zur Kontraststeigerung nach einem der Ansprüche 1 bis 8,
**dadurch gekennzeichnet, dass** die Blende (7) zur Weiterverarbeitung von Informationen über die aktuellen Einstellungen teilweise oder komplett codiert ausgeführt ist.

10. Einrichtung zur Kontraststeigerung nach einem der Ansprüche 1 bis 9,
**dadurch gekennzeichnet,**
**dass** die Einstellungen der Blende (7) durch entsprechende Markierungen und/oder Beschriftungen ablesbar sind.

11. Einrichtung zur Kontraststeigerung nach einem der Ansprüche 1 bis 10,
**dadurch gekennzeichnet,**
**dass** eine Anpassung an die jeweils vorhandenen Beleuchtungsbedingungen eines Mikroskops durch die Auswertung des Kontrastzustands und eine entsprechende Nachregelung der Blende (7) bis zu einem Optimum erfolgt.

12. Einrichtung zur Kontraststeigerung nach einem der Ansprüche 1 bis 11,
**dadurch gekennzeichnet,**
**dass** die Anpassung an die jeweils vorhandenen Beleuchtungsbedingungen eines Mikroskops automatisch durch die Abfrage und/oder Auswertung des vorhandenen Systemzustands erfolgt.

13. Einrichtung zur Kontraststeigerung nach einem der Ansprüche 1 bis 12,
**dadurch gekennzeichnet,**
**dass** die Blende (7) in Kombination mit feststehenden und/oder fokussierbaren Vorsatzoptiken einsetzbar ist, wobei die Blende (7) insbesondere nach einer Vorsatzoptik anzuordnen ist, wenn diese ein hinreichend großes homogenes Feld erzeugt.

14. Einrichtung zur Kontraststeigerung nach einem der Ansprüche 1 bis 13,
**dadurch gekennzeichnet,**
**dass** der Durchmesser der Blende (7) vorzugsweise mittels einer Irisblende verstellbar ist.

## Claims

1. Device for increasing contrast, having a ring light and an objective for ring light illumination systems which are provided for incident illumination of objects to be observed in microscopy, in particular in stereomicroscopy, comprising the ring light (1) which can be mounted on the objective (2) of a microscope, and an optical element intended to increase the contrast for the light rays emanating from the ring light (1),
**characterized in that**
said optical contrast-increasing element is designed as a rotationally symmetrical and adjustable diaphragm (7) being arranged upstream of the light exit of the ring light (1), the diaphragm (7) being adjustable in height with reference to the objective (2) and in diameter with reference to the optical axis of the objective (2), and means being present for clamping the diaphragm (7), and **in that** the diaphragm (7) connected to the ring light (1) is designed in a fashion capable of height adjustment axially relative to the ring light axis, of being decentred on one side, and capable of rotating about the ring light axis, the decentring and the azimuthal alignment of the diaphragm (7) being adjustable separately from one another.

2. Device for increasing contrast according to Claim 1,
**characterized in that**
in order to adjust directionally dependent illuminations and to adapt to the object field diameter (6), the diaphragm (7) connected to the ring light (1) is arranged in a fashion capable of height adjustment and of being decentred with lateral adjustability with respect to the one-sided illumination with restricted azimuths.

3. Device for increasing contrast according to Claim 1,
**characterized in that**
the diaphragm (7) is present for special imaging arrangements in a fashion capable of decentring for illumination conditions which are one-sided or not rotationally symmetrical, and in the case of which the imaging channels are not arranged symmetrically in a microscope objective (2).

4. Device for increasing contrast according to one of Claims 1 to 3,
**characterized in that**
the diaphragm (7) is provided in a fashion capable of being coupled to the ring light (1) by means of an interface (16).

5. Device for increasing contrast according to one of Claims 1 to 4,
**characterized in that**
the diaphragm (7) is a component of the ring light (1).

6. Device for increasing contrast according to one of Claims 1 to 5,
**characterized in that**
a top side (8) of the diaphragm (7) is designed in a fashion partially or completely bevelled such that the light rays (a-i) reflected on the diaphragm (7) can be directed outwards in order to minimize multiple reflections with possible re-entry into the microscope objective (2).

7. Device for increasing contrast according to Claim 6,
**characterized in that**
the top side (8) of the diaphragm (7) has a reflection-reducing coating, or the diaphragm (7) is embodied from a reflection-reducing material.

8. Device for increasing contrast according to one of Claims 1 to 7,
**characterized in that**
the diaphragm (7) can be adjusted by motor under remote control.

9. Device for increasing contrast according to one of Claims 1 to 8,
**characterized in that**
for further processing of information relating to the current settings, the diaphragm (7) is designed in a partially or completely coded fashion.

10. Device for increasing contrast according to one of Claims 1 to 9,
**characterized in that**
the settings of the diaphragm (7) can be read off from corresponding marks and/or inscriptions.

11. Device for increasing contrast according to one of Claims 1 to 10,
**characterized in that**
an adaptation to the respectively present illumination conditions of a microscope is performed by evaluating the contrast state and appropriately readjusting the diaphragm (7) as far as an optimum.

12. Device for increasing contrast according to one of Claims 1 to 11,
**characterized in that**
the adaptation to the respectively present illumination conditions of a microscope is performed automatically by the interrogation and/or evaluation of the present system state.

13. Device for increasing contrast according to one of Claims 1 to 12,
**characterized in that**
the diaphragm (7) can be used in combination with stationary and/or focusable complementary optics, the diaphragm (7) being intended to be arranged downstream of a complementary optics, in particular, when the latter produces a homogeneous field of adequate size.

14. Device for increasing contrast according to one of Claims 1 to 13,
**characterized in that**
the diameter of the diaphragm (7) can preferably be adjusted by means of an iris diaphragm.

## Revendications

1. Dispositif destiné à augmenter le contraste comprenant une lampe annulaire et un objectif pour éclairement annulaire, qui sont prévus pour l'éclairage incident d'objets à observer en microscopie, notamment en microscopie stéréo, constitué de la lampe annulaire (1) pouvant être montée sur l'objectif (2) d'un microscope et d'un élément optique destiné à augmenter le contraste des rayons lumineux émanant de la lampe annulaire (1),
**caractérisé en ce que** cet élément optique destiné à augmenter le contraste est réalisé sous la forme d'un diaphragme (7) symétrique de rotation et réglable, qui est disposé en amont de la sortie de lumière de la lampe annulaire (1), dans lequel le diaphragme (7) est réglable en hauteur par rapport à l'objectif (2) et en diamètre par rapport à l'axe optique de l'objectif (2), **en ce que** des moyens sont présents pour bloquer le diaphragme (7), et **en ce que** le diaphragme (7) relié à la lampe annulaire (1) est conçu de manière à être réglable axialement en hauteur par rapport à l'axe de la lampe annulaire, à pouvoir être décentré d'un côté et à pouvoir être monté tournant autour de l'axe de la lampe annulaire, le décentrement et la direction azimutale du diaphragme (7) étant réglables séparément l'un de l'autre.

2. Dispositif destiné à augmenter le contraste selon la revendication 1, **caractérisé en ce que** le diaphragme (7) relié à la lampe annulaire (1) est disposé de manière à être réglable en hauteur et à pouvoir être décentré pour le réglage d'éclairements dépendant de la direction et pour l'adaptation au diamètre du champ objet (6) pour un éclairement unilatéral et à être réglable latéralement avec des azimuts limités.

3. Dispositif destiné à augmenter le contraste selon la revendication 1, **caractérisé en ce que** le diaphragme (7) est présent de manière à pouvoir être décentré pour des configurations de formation d'image spéciales dans des conditions d'éclairement unilatéral ou non symétrique de rotation dans lesquelles les canaux de formation d'image sont disposés de manière non symétrique dans un objectif de microscope (2).

4. Dispositif destiné à augmenter le contraste selon l'une quelconque des revendications 1 à 3, **caractérisé en ce que** le diaphragme (7) est prévu de manière à pouvoir être couplé à la lampe annulaire (1) au moyen d'une interface (16).

5. Dispositif destiné à augmenter le contraste selon l'une quelconque des revendications 1 à 4, **caractérisé en ce que** le diaphragme (7) fait partie de la lampe annulaire (1).

6. Dispositif destiné à augmenter le contraste selon l'une quelconque des revendications 1 à 5, **caractérisé en ce qu'**une face supérieure (8) du diaphragme (7) est conçue de manière partiellement ou entièrement biseautée afin que les rayons lumineux (ai) réfléchis sur le diaphragme (7) puissent être déviés vers l'extérieur afin de minimiser les réflexions multiples avec réintroduction possible dans l'objectif de microscope (2).

7. Dispositif destiné à augmenter le contraste selon la revendication 6, **caractérisé en ce que** la face supérieure (8) du diaphragme (7) présente un revêtement antiréfléchissant ou **en ce que** le diaphragme (7) est réalisé à partir d'un matériau antiréfléchissant.

8. Dispositif destiné à augmenter le contraste selon l'une quelconque des revendications 1 à 7, **caractérisé en ce que** le diaphragme (7) peut être réglé à distance par un moteur.

9. Dispositif destiné à augmenter le contraste selon l'une quelconque des revendications 1 à 8, **caractérisé en ce que** le diaphragme (7) est réalisé de manière partiellement ou totalement codée afin de soumettre à un traitement supplémentaire des informations concernant les réglages courants.

10. Dispositif destiné à augmenter le contraste selon l'une quelconque des revendications 1 à 9, **caractérisé en ce que** les réglages du diaphragme (7) peuvent être lus au moyen de repères et/ou d'inscriptions correspondants.

11. Dispositif destiné à augmenter le contraste selon l'une quelconque des revendications 1 à 10, **caractérisé en ce que** l'adaptation aux conditions d'éclairement respectivement présentes d'un microscope s'effectue par évaluation de l'état de contraste et par un réajustement correspondant du diaphragme (7) jusqu'à ce qu'un optimum soit atteint.

12. Dispositif destiné à augmenter le contraste selon l'une quelconque des revendications 1 à 11, **caractérisé en ce que** l'adaptation aux conditions d'éclairement respectivement présentes d'un microscope s'effectue de manière automatique par interrogation et/ou évaluation de l'état présent du système.

13. Dispositif destiné à augmenter le contraste selon l'une quelconque des revendications 1 à 12, **caractérisé en ce que** le diaphragme (7) peut être installé en association avec une optique additionnelle fixe et/ou pouvant être focalisée, le diaphragme (7) devant notamment être agencé en aval d'une optique additionnelle lorsque celle-ci génère un champ homogène suffisamment intense.

14. Dispositif destiné à augmenter le contraste selon l'une quelconque des revendications 1 à 13, **caractérisé en ce que** le diamètre du diaphragme (7) peut de préférence être réglé au moyen d'un iris.
